# FASCICULE DE BREVET EUROPEEN

(11) **EP 2 633 962 B1**
(45) Date de publication et mention de la délivrance du brevet: **03.09.2014**
(21) Numéro de dépôt: 13157366.9
(22) Date de dépôt: 01.03.2013
(51) Int. Cl.: B25J 19/06, B25J 9/04, F16H 25/20

(54) **Structure articulée de robot multi-axes et robot comprenant une telle structure**
Gelenkstruktur für einen mehrachsigen Roboter und Roboter mit einer solchen Struktur
Articulated structure for a multi-axis robot and robot with such a structure

(30) Priorité: 02.03.2012 FR 1251958
(43) Date de publication de la demande: 04.09.2013
(73) Titulaire: STÄUBLI FAVERGES, 74210 Faverges (FR)
(72) Inventeur: Gerat, Vincent, 74410 SAINT JORIOZ (FR); Conrad, Joël, 74210 DOUSSARD (FR); Sallet, Eric, 73460 FRONTENEX (FR)
(74) Mandataire: Myon, Gérard Jean-Pierre

(56) Documents cités:
- EP-A1- 1 852 225
- JP-A- 1 146 678
- JP-A- 5 116 093
- JP-A- 2007 237 316
- JP-B- 8 011 378

## Description

La présente invention a trait à une structure articulée de robot multi-axes, ainsi qu'à un robot multi-axes comprenant une telle structure.

Certains robots multi-axes sont utilisés pour manipuler de façon rapide des pièces, suivant des trajectoires proches d'un plan. Tel est par exemple le cas lorsqu'il s'agit de prendre une pièce qui défile sur un tapis roulant et de la déposer sur un organe de conditionnement plan.

Les robots de type SCARA (Sélective Compliance Assembly Robot Arm) sont des robots multi-axes adaptés au travail dans un plan horizontal. De façon classique un robot de type SCARA comprend un bâti fixe, susceptible par exemple d'être posé sur une table. Il est en outre prévu un bras mobile par rapport au bâti, au moins en rotation, notamment autour d'un axe vertical. Enfin, ce robot est équipé d'un organe, tel qu'une bride, qui permet la réception d'un outil, qui est par exemple une pince de préhension ou un outil de meulage. L'organe de réception de l'outil est monté sur un avant-bras, qui est lui même mobile en rotation par rapport au bras. En outre, l'organe de réception de l'outil est mobile en rotation par rapport à cet avant bras.

Il convient parfois que ces robots puissent également effectuer un mouvement dans un plan vertical. Ce mouvement vertical est généralement assuré par un système de douilles à billes, décrit par exemple dans FR-A-2628170. L'organe de réception de l'outil est alors monté sur un arbre dont la surface extérieure comporte des rainures hélicoïdales et des rainures longitudinales. Deux douilles sont montées sur l'arbre rainuré par l'intermédiaire de billes logées dans les rainures de l'arbre, la surface interne de la première douille ou «douille-écrou» étant pourvue de rainures hélicoïdales et la deuxième douille ou «douille-glissière» étant pourvue de rainures longitudinales. Les douilles sont entrainées séparément en rotation et permettent à l'arbre rainuré, et donc également à l'organe de réception de l'outil, de se déplacer axialement, de tourner ou d'exécuter un mouvement combiné de rotation et de translation.

En cas de coupure de l'alimentation électrique du robot, l'outil, ou plus généralement la charge du robot, est entrainée vers le bas, par gravité, dans un mouvement combiné de translation et de rotation, ce qui n'est pas conforme aux exigences de sécurité car le robot et la charge du robot risquent de s'endommager ou de blesser un opérateur.

Pour assurer l'immobilisation verticale de la charge en cas de coupure de l'alimentation, il est connu d'équiper les moteurs qui entrainent les douilles avec des freins qui, lors de la coupure d'alimentation électrique, immobilisent l'arbre de sortie des moteurs. Le document JP-A-01 146678 divulgue un robot de type SCARA comprenant une structure articulée selon le préambule de la revendication 1 de la présente invention et munie d'un tel frein. Ces freins sont généralement lourds, ce qui pénalise l'inertie des parties mobiles du robot, lorsque les moteurs sont fixés à ces parties mobiles. Cette solution est donc défavorable pour des applications où le robot effectue des déplacements à grande vitesse.

En alternative, EP-A-1852225 propose de solidariser en rotation les deux douilles pour freiner l'arbre rainuré. Les deux douilles sont disposées dans le bâti du robot. Pour freiner l'arbre rainuré, un électroaimant et une bague fendue montée glissante sur l'arbre rainuré sont prévus en dessous des deux douilles, en partie basse de l'arbre rainuré. La bague fendue est prise, de part et d'autre et latéralement, dans un palier bipartite formé par deux bagues dont l'une est fixe et l'autre est mobile. La bague fixe est solidaire de la douille inférieure tandis que la bague mobile est prévue pour être repoussée par un ressort contre la bague fixe, de sorte que la bague fendue se retrouve coincée entre les deux bagues du palier. Dans la configuration de fonctionnement du robot, pour laquelle il n'est pas nécessaire de freiner l'arbre rainuré, l'électroaimant attire vers lui la bague mobile, à l'encontre de la force de rappel exercée par le ressort, libérant ainsi la bague fendue qui n'immobilise pas les douilles. Dans la configuration de freinage, l'électroaimant n'est plus alimenté et le ressort repousse la bague mobile du palier contre la bague fixe, ce qui coince la bague fendue et immobilise les douilles pour freiner la charge. Dans la configuration de fonctionnement, la bague fendue frotte sur l'arbre rainuré. La bague fendue présente ainsi une indétermination de positionnement et des risques d'usure indésirables, ce qui n'est pas souhaitable notamment pour un fonctionnement à très haute cadence.

C'est à ces inconvénients qu'entend plus particulièrement remédier l'invention en proposant une structure de robot multi-axes intégrant un système de couplage adapté à un fonctionnement à très haute cadence.

A cet effet, l'invention a pour objet une structure articulée de robot multi-axes, comprenant :
- un bâti fixe,
- un bras articulé sur le bâti autour d'un premier axe,
- un premier actionneur électrique commandant le pivotement du bras autour du premier axe,
- un avant-bras articulé sur le bras autour d'un deuxième axe parallèle au premier axe,
- un deuxième actionneur électrique commandant le pivotement de l'avant-bras autour du deuxième axe,
- un arbre pour la fixation d'un outil, articulé sur l'avant-bras autour d'un troisième axe parallèle aux premier et deuxième axes,
- un troisième actionneur électrique commandant le pivotement d'une douille-glissière,
- un quatrième actionneur électrique commandant le pivotement d'une douille-écrou,
   structure dans laquelle :
- la douille-glissière est mobile par rapport à l'avant-bras en rotation autour du troisième axe et liée en translation par rapport à l'avant bras, cette douille-glissière étant munie d'organes de prise, en particulier de billes, disposées axialement, qui sont propres à coopérer avec au moins une rainure longitudinale de l'arbre,
- la douille-écrou est mobile en rotation par rapport à l'avant-bras autour du troisième axe et liée en translation par rapport à l'avant bras, cette douille-écrou étant pourvue d'organes de prise, en particulier de billes, disposées de manière hélicoïdale autour de l'axe de déplacement, qui sont propres à coopérer avec au moins une rainure hélicoïdale ménagée sur l'arbre, la douille-glissière et la douille-écrou sont disposées en extrémité de l'avant-bras. Conformément à l'invention, la structure articulée comprend en outre un dispositif de couplage, apte à solidariser en rotation la douille-écrou et de la douille-glissière.

Comme expliqué plus en détail dans la suite, grâce notamment au dispositif de couplage, le robot conforme à l'invention se prête de façon aisée aux opérations d'apprentissage consistant à amener manuellement l'organe de réception de l'outil à un emplacement souhaité, puis à mémoriser cette configuration, plutôt que de la programmer. Les douilles étant disposées en extrémité de l'avant bras, elles sont dimensionnées pour l'actionnement de l'arbre et de la charge utile uniquement. Leur inertie est donc faible et ne pénalise pas les performances dynamiques. Seul l'arbre, l'outil et la charge utile sont susceptibles de se déplacer suivant une direction verticale. Le volume balayé par le bras et l'avant bras ne dépend pas de la position verticale de l'outil.

Selon des aspects avantageux mais non obligatoires de l'invention, une telle structure de robot peut incorporer une ou plusieurs des caractéristiques suivantes, prises dans toute combinaison techniquement admissible :
- Le dispositif de couplage comprend une rondelle disposée axialement, le long du troisième axe, entre les douilles et liée en rotation avec une première douille parmi la douille-glissière et la douille-écrou. La rondelle de couplage est mobile axialement entre :
- une configuration de couplage, dans laquelle la rondelle de couplage, est maintenue contre une deuxième douille parmi la douille-glissière et la douille-écrou, du fait de l'adhérence entre la rondelle de couplage et la deuxième douille,
- une configuration de fonctionnement, dans laquelle la translation et la rotation de l'arbre par rapport à l'avant bras, selon l'axe de déplacement, est libérée au moyen d'un premier électroaimant qui, lorsqu'alimenté en énergie électrique, attire la rondelle de couplage vers la première douille, libérant la rotation de la première douille par rapport à la deuxième douille.

Lorsque l'électro-aimant est alimenté en énergie électrique, il attire vers lui la rondelle de couplage, créant ainsi un espace libre entre la rondelle et la deuxième douille, de sorte que la deuxième douille est libre de tourner par rapport à la douille-écrou, autorisant ainsi le fonctionnement du robot. Cette configuration est activable lorsque le robot est sous tension.

- Avantageusement, le dispositif de couplage comprend alors en outre au moins un organe élastique. Dans la configuration de couplage, la rondelle de couplage est maintenue contre la deuxième douille au moyen de l'organe élastique qui est disposé axialement entre la première douille et la rondelle de couplage et qui repousse la rondelle de couplage contre la deuxième douille et dans la configuration de fonctionnement, l'électroaimant attire la rondelle de couplage vers la première douille, à l'encontre de la force de rappel exercée par l'organe élastique.

Lorsque l'électro-aimant n'est plus alimenté, l'organe élastique repousse la rondelle contre la deuxième douille, de sorte que les deux douilles sont solidarisées en rotation du fait de l'adhérence par frottement entre la rondelle et la première douille. Cette configuration de couplage garantit l'immobilisation verticale de la charge supportée par l'organe porte-outil. De cette manière, la sécurité du robot est garantie, notamment à très haute cadence, lorsque le robot est utilisé pour manipuler de façon rapide des pièces.
- En alternative, le dispositif de couplage comprend en outre un deuxième électroaimant. Dans la configuration de couplage, la rondelle de couplage est maintenue contre la deuxième douille au moyen du deuxième électroaimant qui, alimenté en énergie électrique, attire la rondelle de couplage contre la deuxième douille et dans la configuration de fonctionnement, le deuxième électroaimant n'est pas alimenté et le premier électroaimant, alimenté en énergie électrique, attire la rondelle de couplage vers la première douille.
- L'électroaimant est monté autour d'un chapeau fixé sur la première douille, avec un jeu radial entre le chapeau et l'électroaimant.
- La solidarisation en rotation de la rondelle de couplage avec la première douille est réalisée au moyen d'au moins un pion de guidage monté dans des trous réalisés à la fois dans la rondelle de couplage et dans la première douille.
- Le premier actionneur électrique et le deuxième actionneur électrique sont fixes par rapport au bâti.
- Le troisième actionneur électrique est fixé sur le bras et le quatrième actionneur électrique est fixé sur l'avant bras. En variante, le quatrième actionneur électrique est fixé sur le bras et le troisième actionneur électrique est fixé sur l'avant bras.
- Le mouvement de pivotement d'au moins un des actionneurs électriques est transmis par l'intermédiaire d'un système à poulie et courroie.
- La première douille est formée par la douille-écrou et en ce que la deuxième douille est formée par la douille-glissière.

L'invention concerne également un robot multi-axes comprenant une telle structure de robot.

L'invention sera mieux comprise et d'autres avantages de celle-ci apparaîtront plus clairement à la lumière de la description qui va suivre d'un robot multi-axes conforme à l'invention, donnée uniquement à titre d'exemple et faite en référence aux dessins annexés dans lesquels :
- La figure 1 est une vue écorchée en perspective d'un robot multi-axes conforme à l'invention ;
- La figure 2 est une vue partielle de dessus du détail Il à la figure 1 sans capot;
- Les figures 3, 4 et 5 sont des coupes, respectivement selon les lignes III-III, IV-IV et V-V à la figure 2 ;
- La figure 6 est une vue, à plus grande échelle du détail VI à la figure 5 ;
- La figure 7 est une vue analogue à la figure 6, pour une autre configuration d'utilisation.

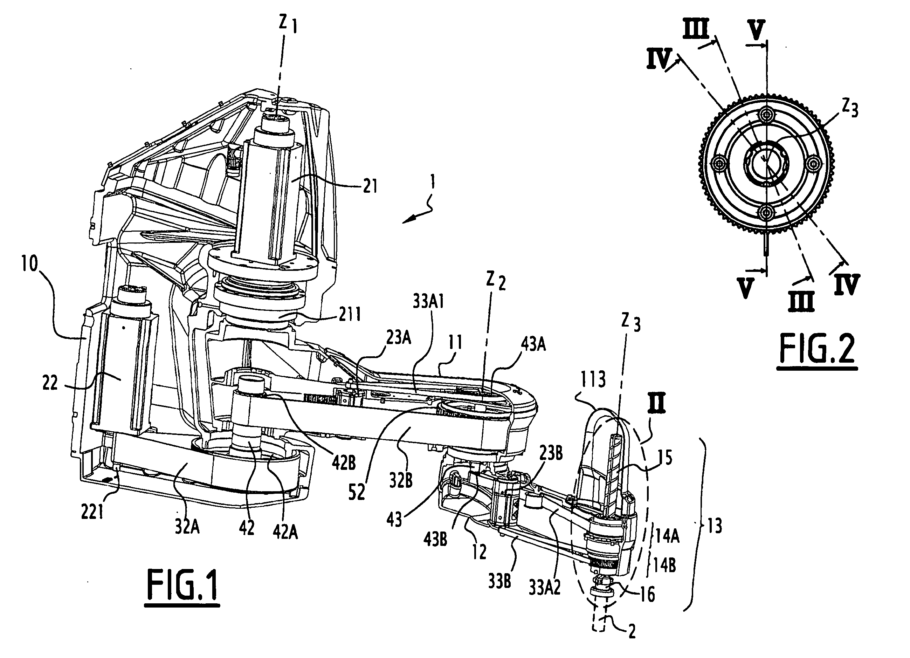

La structure 1 visible à la figure 1 fait partie d'un robot SCARA multi-axes qui comprend également une unité de commande électronique, des faisceaux de câbles et d'autres accessoires qui ne sont pas représentés pour la clarté des figures.

La structure 1 est destinée à déplacer vers différentes positions un outil 2, représenté de façon schématique et en traits mixtes uniquement à la figure 1, selon des trajectoires s'étendant à la fois dans un plan horizontal et perpendiculairement à ce plan. L'outil 2 peut, par exemple, être un outil de préhension ou une fraise.

La structure 1 comprend un bâti 10 fixe par rapport au local dans lequel est installée la structure 1. Le bâti 10 forme une chape d'articulation d'un bras 11 autour d'un premier axe vertical Z₁.

Un premier actionneur 21, formé par un motoréducteur rotatif électrique, dont l'arbre de sortie 211 est aligné sur l'axe Z₁ et solidaire en rotation du bras 11, est monté sur le bâti 10. L'actionneur 21 entraîne ainsi le bras 11 autour de l'axe Z₁, par rapport au bâti 10.

Le bras 11 supporte un avant bras 12 qui est articulé par rapport au bras 11 autour d'un deuxième axe Z₂ parallèle à l'axe Z₁ et donc également vertical dans l'exemple représenté. Un deuxième actionneur 22, formé par un moteur électrique rotatif dont l'arbre de sortie 221 est pourvu d'un pignon, est monté dans le bâti 10. Une courroie crantée 32A est montée entre ce pignon et une couronne dentée 42A fixée à un arbre 42, monté dans le bâti 10, aligné sur l'axe Z₁ et libre en rotation par rapport au bâti 10. Par souci de clarté de la figure 1, les roulements d'articulation de l'arbre 42 dans le bâti 10 et le bras 11 ne sont pas représentés. Les actionneurs 21 et 22 étant placés dans le bâti 10, ils sont fixes et contribuent à réduire l'inertie du bras 11 et de l'avant bras 12 car ils n'affectent pas leur masse, ce qui favorise les performances du robot pour des applications nécessitant des déplacements très rapides.

Une autre courroie crantée 32B s'étend le long du bras 11. Cette courroie 32B est montée entre un pignon 42B fixé sur l'arbre 42 et une couronne dentée 52 alignée sur l'axe Z₂ et solidaire en rotation de l'avant-bras 12. L'actionneur 22 entraîne ainsi l'avant-bras 12 autour de l'axe Z₂, par rapport au bras 11.

L'avant-bras 12 supporte, à son extrémité opposée au bras 11, un organe porte-outil 13 comprenant deux douilles 14A et 14B montées autour d'un arbre 15 qui est creux pour le passage éventuel de câbles d'alimentation destinés à l'outil et aligné sur un troisième axe de déplacement Z₃ parallèle aux axes Z₁ et Z₂ et donc également vertical dans l'exemple représenté. La douille 14B est montée en dessous de la douille 14A et les douilles 14A et 14B sont séparées l'une de l'autre par une distance d strictement supérieure à zéro. L'extrémité inférieure de l'arbre 15 est pourvue d'une bride 16 de fixation de l'outil 2.

La douille 14A est entrainée en rotation par un actionneur 23A, monté sur le bras 11 et formé par un actionneur rotatif électrique dont l'arbre de sortie est pourvu d'un pignon. L'actionneur 23A est placé relativement proche de l'axe Z₁ de manière à réduire l'inertie du bras 11 grâce à un système de double courroie permettant de réduire l'inertie de l'avant bras 12 en fixant l'actionneur 23A sur le bras 11. Une courroie crantée 33A1 est montée entre ce pignon et une couronne dentée 43A montée sur un arbre 43 aligné sur l'axe Z₂ et libre en rotation par rapport au bras 11 et à l'avant-bras 12. Par souci de clarté de la figure 1, les roulements d'articulation de l'arbre 43 dans le bras 11 et l'avant-bras 12 ne sont pas représentés. L'arbre 43 est également équipé d'un pignon 43B qui engrène avec une courroie crantée 33A2 montée entre ce pignon 43B et la douille 14A. L'actionneur 23A entraîne ainsi la douille 14A autour de l'axe Z₃, par rapport à l'avant-bras 12.

La douille 14B est entrainée en rotation par un actionneur 23B, monté sur l'avant bras 12 et formé par un actionneur rotatif électrique dont l'arbre de sortie est pourvu d'un pignon. L'actionneur 23B est placé relativement proche de l'axe Z₂ de manière à réduire l'inertie de l'avant bras 12. Une courroie crantée 33B est montée entre ce pignon et la douille 14B. L'actionneur 23B entraîne ainsi la douille 14B autour de l'axe Z₃, par rapport à l'avant-bras 12.

Les douilles 14A et 14B sont donc entrainées en rotation séparément, par rapport à l'avant-bras 12, au moyen des actionneurs 23A et 23B.

Pour réduire leur inertie, le bras 11 et l'avant bras 12 sont réalisés à partir d'un alliage métallique léger tel qu'un alliage d'aluminium ou de magnésium, ou à partir d'un matériau composite incorporant des fibres de verre ou de carbone. On notera que le système de transmission de la structure 1 à poulies et courroies est plus léger qu'un système de transmission à engrenages, ce qui contribue à réduire la masse et donc l'inertie du bras 11 et de l'avant bras 12.

A la figure 2, un capot de protection 113 de l'organe porte outil 13 n'est pas représenté.

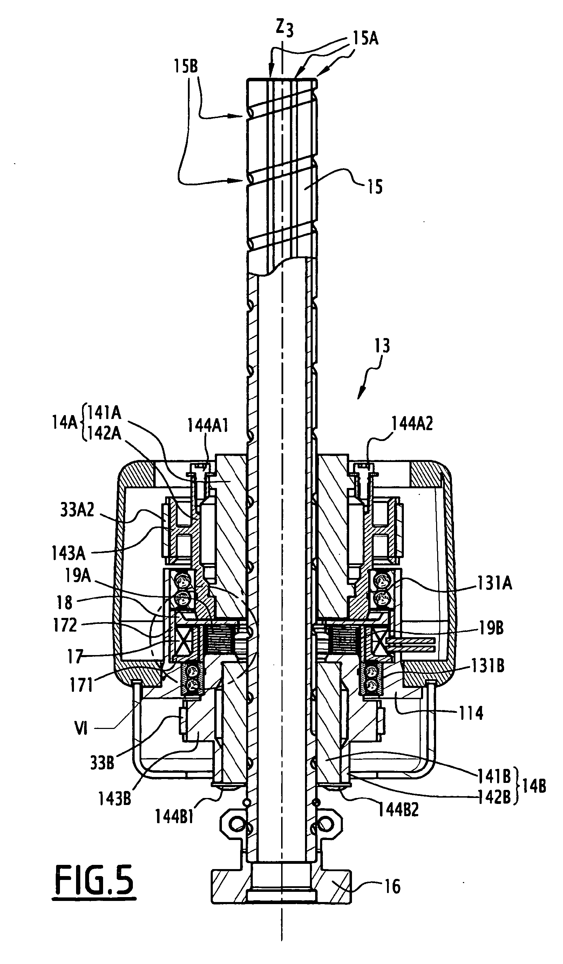

Comme visible plus particulièrement à la figure 5, l'arbre 15 comporte, dans sa surface périphérique extérieure, une rainure hélicoïdale 15B de circulation d'organes de prise, en particulier de billes, ainsi que des rainures longitudinales 15A de circulation de billes, formant des cannelures. Sur les figures, les billes ne sont pas représentées. Les rainures 15A et 15B se chevauchent au niveau de leurs intersections.

La douille 14A comprend un manchon intérieur 141A dont la surface intérieure comporte des rainures longitudinales. Le manchon 141A est monté dans un support de courroie 142A supportant une couronne dentée 143A qui engrène avec la courroie 33A2. Le manchon intérieur 141A et le support de courroie 142A sont fixés l'un à l'autre au moyen de vis 144A1 et 144A2 et forment ensemble la douille 14A, qui est montée sur l'arbre 15 par l'intermédiaire des billes qui sont disposées dans les rainures longitudinales du manchon 141A et qui circulent dans les rainures longitudinales 15A de l'arbre 15.

La douille 14A, dite « glissière », est ainsi liée en rotation par rapport à l'arbre 15, selon l'axe Z₃, tout en étant mobile en translation par rapport à l'arbre 15, selon l'axe Z₃.

De la même manière, la douille 14B comprend un manchon intérieur 141 B dont la surface intérieure comporte une rainure hélicoïdale. Le manchon 141B est monté à l'intérieur d'un support de courroie 142B supportant une couronne dentée 143B qui engrène avec la courroie 33B. Le manchon intérieur 141B et le support de courroie 142B sont fixés l'un à l'autre au moyen de vis 144B1 et 144B2 et forment ensemble la douille 14B, qui est montée sur l'arbre 15 par l'intermédiaire des billes qui sont disposées dans la rainure hélicoïdale du manchon 141 B et qui circulent dans la rainure hélicoïdale 15B de l'arbre 15.

La douille 14B, dite « écrou » est ainsi liée à l'arbre 15 selon un mouvement combiné de rotation et de translation, selon l'axe Z₃.

Chaque douille 14A et 14B est montée rotative autour de l'axe Z₃ dans un corps 114 de l'organe porte-outil 13, par l'intermédiaire de paliers de support 131 A et 131B de type roulements à billes. Le corps 114 est fixe par rapport à l'avant-bras 12. Les douilles 14A et 14B peuvent ainsi tourner indépendamment l'une de l'autre, autour de l'axe Z₃, par rapport au corps 114. Les douilles 14A et 14B sont chacune bloquées en translation, selon l'axe Z₃, par rapport au corps 114.

En fonction de l'actionnement ou du blocage de chaque actionneur 23A et 23B, chaque douille 14A et 14B est entraînée au choix en rotation ou maintenue immobile par rapport au corps 114 de l'organe porte-outil 13, ce qui permet à l'arbre 15 de se déplacer axialement ou d'exécuter un mouvement combiné comprenant une composante de mouvement de rotation autour de l'axe Z₃ et une composante de mouvement de translation le long de l'axe Z₃.

De façon plus précise, si l'on désire conférer à l'arbre 15 un mouvement de translation pure, il s'agit d'actionner uniquement l'actionneur 23B de la douille-écrou 14B, de façon à entraîner en rotation la douille-écrou 14B, l'autre actionneur 23A étant bloqué en position. Le mouvement de rotation de cette douille-écrou 14B, dont on rappelle qu'elle est bloquée en translation suivant l'axe Z₃, induit alors la translation de l'arbre 15 selon cet axe Z₃. De plus, si l'on désire conférer à l'arbre 15 un mouvement de rotation pure, il s'agit d'entraîner les deux douilles 14A et 14B dans le même sens de rotation, à la même vitesse de rotation.

Enfin, si l'on désire conférer un mouvement combiné de translation et de rotation à l'arbre 15, il s'agit d'actionner uniquement l'actionneur 23A de la douille-glissière 14A ou d'entraîner les deux douilles 15A et 15B à des vitesses de rotation différentes. Dans cette optique, on peut également entraîner les actionneurs 23A et 23B selon des sens de rotation contraires, en fonction de la nature du mouvement que l'on désire impartir à l'arbre 15.

En cas de coupure du courant électrique, les arbres de sortie des actionneurs 23A et 23B sont libres de tourner et l'outil 2, ou plus généralement la charge supportée par la bride 16, est entrainée vers le bas par gravité. L'arbre 15 a alors tendance à descendre dans un mouvement combiné de translation et de rotation, ce qui est mauvais pour la sécurité des opérateurs et pour la protection du matériel. Pour empêcher ce phénomène, l'organe porte-outil 13 comprend un dispositif de blocage de la translation de l'arbre 15 vers le bas, en cas de coupure de l'alimentation électrique du robot, en particulier en cas de coupure de l'alimentation électrique des actionneurs 23A et 23B.

Ce dispositif est constitué d'un électroaimant 17 fixe par rapport au corps 114 de l'organe porte-outil 13 et placé, le long de l'axe Z₃, entre les douilles 14A et 14B. L'électroaimant 17 est monté dans une bague épaulée 171 ayant une extrémité longitudinale qui est en appui contre une surface du corps 114 orientée perpendiculairement à l'axe Z₃. L'électroaimant 17 et la bague épaulée 171 sont disposés dans une bague externe 172 montée à l'intérieur du corps 114. L'électroaimant 17, la bague épaulée 171 et la bague externe 172 sont coaxiaux et centrés sur l'axe Z₃.

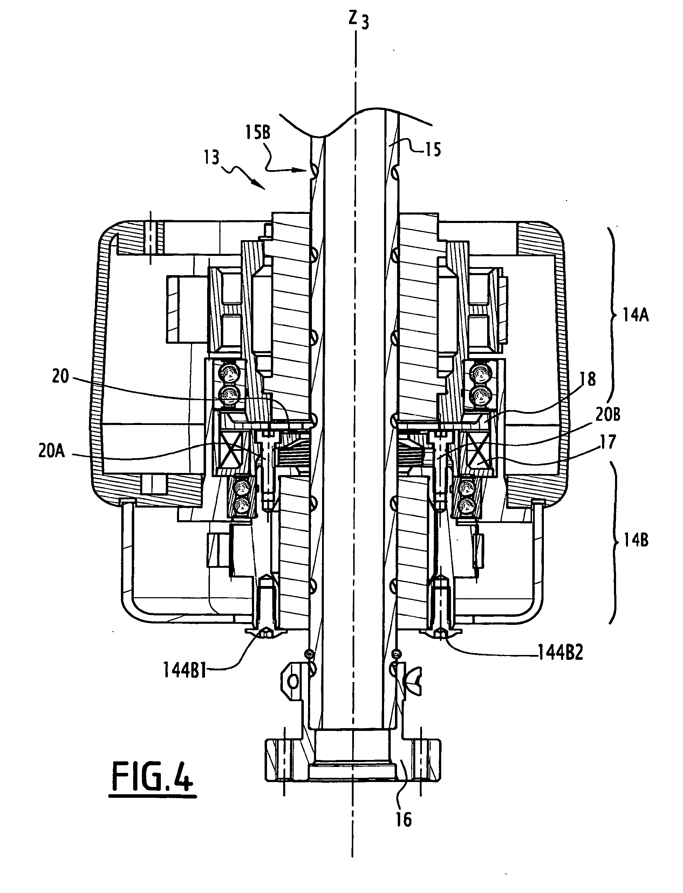

Comme visible notamment à la figure 4, un chapeau 20 globalement annulaire, centré sur l'axe Z₃, est fixé autour de l'extrémité supérieure de la douille-écrou 14B, au moyen de deux vis 20A et 20B. Le chapeau 20 comporte un passage central pour l'arbre 15 et il est disposé dans le volume cylindrique intérieur de la bague épaulée 171.

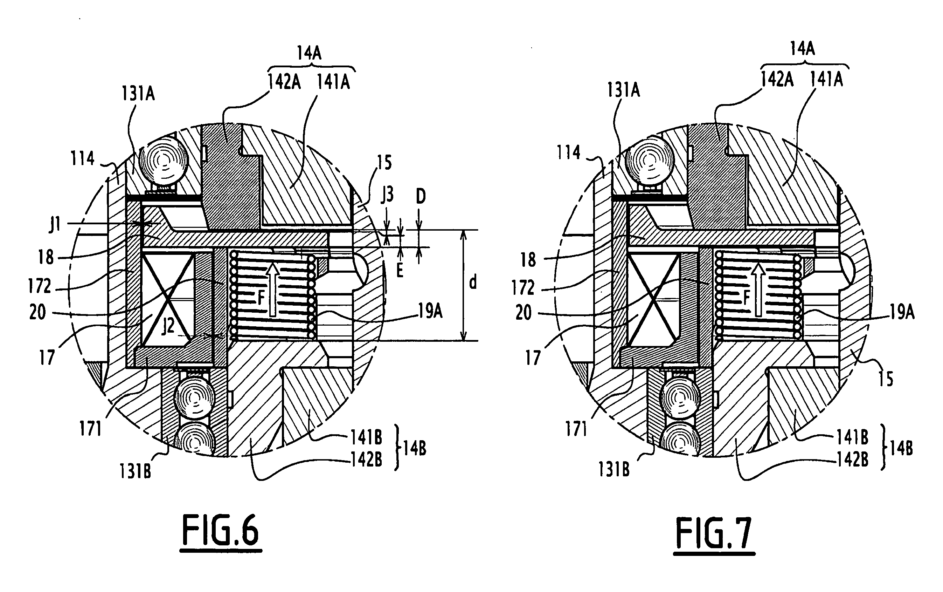

Une rondelle de couplage 18, disposée dans le volume cylindrique intérieur de la bague externe 172 et libre en translation le long de l'axe Z₃ par rapport au corps 114, est montée autour de l'arbre 15, entre les douilles 14A et 14B et au dessus de l'électroaimant 17. Comme le montre la figure 6, des légers jeux radiaux J1 et J2 sont présents, d'une part, entre la surface circonférentielle extérieure de la rondelle.de couplage 18 et la surface circonférentielle intérieure de bague externe 172 et, d'autre part, entre la surface circonférentielle extérieure du chapeau 20 et la surface circonférentielle intérieure de la bague épaulée 171, de manière à éviter les frottements lors du mouvement de rotation relatif de ces éléments.

La rondelle de couplage 18 est disposée, le long de l'axe Z₃, entre le chapeau 20 et la douille-glissière 14A. On note D, une distance minimale mesurée le long de l'axe Z₃, entre le chapeau 20 et la douille-glissière 14A. On note E, l'épaisseur de la rondelle de couplage 18, mesurée parallèlement à l'axe Z₃, au niveau de la partie de la rondelle de couplage 18 située au niveau de la distance minimale D. La distance D est légèrement supérieure à l'épaisseur E, de sorte que la rondelle de couplage 18 est susceptible de se translater, le long de l'axe Z₃, entre le chapeau 20 et la douille-glissière 14A.

Des organes élastiques 19A et 19B de type ressorts de compression sont disposés axialement entre, et en contact avec, le support de courroie 142B de la douille-écrou 14B et la rondelle de couplage 18. Le chapeau 20 est percé pour permettre le passage des ressorts 19A et 19B. La force de rappel F exercée par les ressorts 19A et 19B sur la rondelle de couplage 18 tend à repousser la rondelle de couplage 18 vers le haut, contre le support de courroie 142A de la douille-glissière 14A, à l'opposé de la douille-écrou 14B.

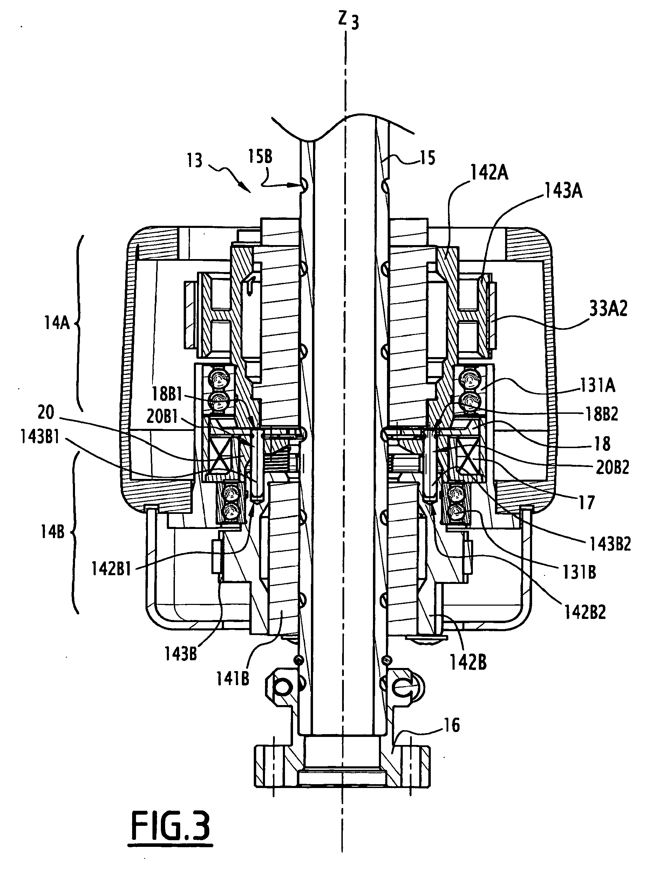

Comme visible à la figure 3, des pions de guidage 143B1 et 143B2 parallèles à l'axe Z₃ sont montés fermement chacun dans un trou 142B1 ou 142B2 réalisé dans le support de courroie 142B, et glissants chacun dans un trou 18B1, 20B1 ou 18B2, 20B2 réalisés dans le chapeau 20 et dans la rondelle de couplage 18. Les pions de guidage 143B1 et 143B2 solidarisent en rotation la rondelle de couplage 18 avec la douille-écrou 14B et le chapeau 20, tout en autorisant la translation de la rondelle de couplage 18 par rapport à la douille-écrou 14B et au chapeau 20.

La douille-écrou 14B, les pions de guidage 143B1 et 143B2, le chapeau 20 et la rondelle de couplage 18 sont donc solidaires les uns des autres et peuvent tourner ensemble librement et sans frottements par rapport au corps 114, autour de l'axe Z₃, notamment grâce au palier 131 B et aux jeux radiaux J1 et J2.

La rondelle de couplage 18, le chapeau 20, la bague externe 172 et la bague épaulée 171 sont réalisées à partir d'un matériau magnétique, par exemple du fer doux, afin de pouvoir réagir au champ magnétique créé par l'électroaimant 17.

Le fonctionnement est le suivant : dans la configuration de fonctionnement du robot, représentée à la figure 6, la bobine de l'électroaimant 17 est alimentée en énergie électrique. En particulier, les lignes de flux du champ magnétique créé par l'électroaimant 17 circulent dans un circuit formé successivement par la bobine de l'électroaimant 17, la bague épaulée 171, le jeu J2, le chapeau 20, la rondelle de couplage 18, le jeu J1, la bague externe 172 et la bobine de l'électroaimant 17.

La rondelle de couplage 18 est alors attirée vers l'électroaimant 17 et la douille-écrou 14B, grâce au champ magnétique créé par l'électroaimant, et se trouve ainsi en appui contre le chapeau 20. De cette manière, un jeu fonctionnel J3 mesuré le long de l'axe Z₃ est présent entre la rondelle de couplage 18 et la douille-glissière 14A. Les douilles 14A et 14B ne sont donc pas liées mécaniquement l'une à l'autre, ce qui leur permet de tourner indépendamment l'une de l'autre, en fonction de la commande des actionneurs 23A et 23B. Cette configuration de fonctionnement du robot est activée par défaut en service, de manière à laisser libre le déplacement de l'arbre 15. Elle correspond à un état du robot dans lequel il est apte à effectuer un cycle de mouvements programmés ou à répondre à des commandes de mouvements isolées émises par exemple à partir d'un terminal de commande.

Dans une configuration de couplage, représentée à la figure 7, la bobine de l'électroaimant 17 n'est plus alimentée en énergie électrique et les ressorts 19A et 19B repoussent la rondelle de couplage 18 vers le haut, au contact de la douille-glissière 14A. Grâce à l'adhérence par frottement entre la douille-glissière 14A et l'ensemble formé par la rondelle de couplage 18, le chapeau 20 et la douille-écrou 14B, les douilles 14A et 14B se trouvent alors liées en rotation et en translation l'une à l'autre. L'arbre 15 ne peut plus se translater par rapport aux douilles 14A et 14B, le long de l'axe Z₃, du fait de l'assemblage de l'arbre 15 avec les douilles 14A et 14B, par l'intermédiaire des billes circulant dans les rainures 15A et 15B.

Ainsi, dans la configuration de couplage, la masse de l'outil 2, et plus généralement la charge fixée à l'arbre 15, ne peut pas être entrainée vers le bas par gravité, ce qui sécurise le robot et la charge.

Etant donné que dans la configuration de couplage, la rotation des douilles 14A et 14B par rapport au corps 114 de l'organe porte-outil 113 est libre, il est possible de réaliser des opérations d'apprentissage de la structure de robot 1, puisque le bras 11, l'avant-bras 12 et l'ensemble formé par les douilles 14A et 14B et l'arbre 15 peuvent chacun être déplacés en rotation, autour des axes Z₁, Z₂ et Z₃. Par ailleurs, le fait que l'arbre 15 est bloqué en translation est avantageux, notamment dans la mesure où il n'est pas nécessaire pour l'opérateur de le soutenir à l'encontre de la gravité.

L'électroaimant 17 est à simple effet, dans la mesure où la position de couplage est activée automatiquement lors de la coupure de l'alimentation électrique, ce qui est avantageux pour la sécurité. La structure de robot 1 arrête rapidement le déplacement vertical de l'arbre 15 en cas de coupure d'alimentation électrique, car le temps de réaction de l'électroaimant 17 est très court et le déplacement de la rondelle de couplage 18 très rapide compte tenu de la valeur faible du jeu J3.

Les actionneurs 23A et 23B n'ont pas besoin d'être équipés de freins, puisque la rondelle de couplage 18 assure le couplage de l'arbre 15. La rondelle de couplage 18 est la seule pièce mobile dédiée au couplage, ce qui permet d'envisager un électroaimant de faible dimension. Le bilan des masses est alors favorable par rapport à la solution alternative connue consistant à équiper les actionneurs 23A et 23B de freins. Grâce à l'invention, l'inertie du bras 11, de l'avant bras 12 et de l'organe porte-outil 13 est réduite.

En alternative, la douille-écrou 14B est située au dessus de la douille-glissière 14A. La rondelle de couplage 18 peut être liée en translation à la douille-glissière 14A au lieu d'être assemblée à la douille-écrou 14B.

Dans l'exemple représenté, lorsque l'électroaimant 17 n'est plus alimenté, la rondelle de couplage 18 vient au contact du support de courroie 142A de la douille-glissière 14A mais, en alternative, la rondelle de couplage 18 peut venir au contact du manchon intérieur 141 B. En inversant le système de couplage, ce contact peut également se faire au niveau de la douille-écrou 14B.

L'exemple décrit met en oeuvre un électroaimant simple effet qui agit à l'encontre d'une force de rappel exercée par un organe élastique. En alternative, le maintien de la rondelle de couplage 18 peut résulter de l'effet d'un électroaimant additionnel placé symétriquement à l'électroaimant 17 dont il reprend la construction. Dans ce cas, dans la configuration de couplage, la rondelle de couplage 18 est maintenue contre la douille-glissière 14A au moyen de l'électroaimant additionnel qui, alimenté en énergie électrique, attire la rondelle de couplage 18 contre la douille-glissière 14A. Dans la configuration de fonctionnement, l'électroaimant additionnel n'est pas alimenté et le premier électroaimant 17, alimenté en énergie électrique, attire la rondelle de couplage 18 vers la douille-écrou 14B de manière à maintenir la rondelle de couplage 18 à distance de la douille-glissière 14A.

En alternative, les billes de guidage des douilles 14A et 14B sont remplacées par d'autres organes de prise, notamment des galets ou des rouleaux.

Dans le cadre de l'invention, les caractéristiques des différentes variantes peuvent être combinées entre elles, au moins de manière partielle, en restant dans le cadre défini par les revendications.

## Revendications

1. Structure articulée (1) de robot multi-axes, comprenant :
- un bâti (10) fixe,
- un bras (11) articulé sur le bâti autour d'un premier axe (Z₁),
- un premier actionneur électrique (21) commandant le pivotement du bras (11) autour du premier axe (Z₁),
- un avant-bras (12) articulé sur le bras autour d'un deuxième axe (Z₂) parallèle au premier axe,
- un deuxième actionneur électrique (22) commandant le pivotement de l'avant-bras (12) autour du deuxième axe (Z₂),
- un arbre (15) pour la fixation d'un outil (2), articulé sur l'avant-bras (12) autour d'un troisième axe (Z₃) parallèle aux premier et deuxième axes,
- un troisième actionneur électrique (23A) commandant le pivotement d'une douille-glissière (14A),
- un quatrième actionneur électrique (23B) commandant le pivotement d'une douille-écrou (14B),
structure dans laquelle :
- la douille-glissière (14A) est mobile par rapport à l'avant-bras (12) en rotation autour du troisième (Z₃) et liée en translation par rapport à l'avant bras (12), cette douille-glissière (14A) étant munie d'organes de prise, en particulier de billes, disposées axialement, qui sont propres à coopérer avec au moins une rainure longitudinale (15A) de l'arbre (15),
- la douille-écrou (14B) est mobile en rotation par rapport à l'avant-bras (12) autour du troisième axe (Z₃) et liée en translation par rapport à l'avant bras (12), cette douille-écrou (14B) étant pourvue d'organes de prise, en particulier de billes, disposées de manière hélicoïdale autour de l'axe de déplacement (Z₃), qui sont propres à coopérer avec au moins une rainure hélicoïdale (15B) ménagée sur l'arbre (15),
- la douille-glissière (14A) et la douille-écrou (14B) sont disposées à l'extrémité de l'avant-bras (12)
et **caractérisée en ce que**
- la structure articulée (1) comprend en outre un dispositif de couplage, apte à solidariser en rotation la douille-écrou (14B) et de la douille-glissière (14A).

2. Structure articulée (1) selon la revendication 1, **caractérisée en ce que** le dispositif de couplage comprend une rondelle (18) disposée axialement, le long du troisième axe (Z₃), entre les douilles (14A, 14B) et liée en rotation avec une première douille parmi la douille-glissière (14A) et la douille-écrou (14B) et **en ce que** la rondelle de couplage (18) est mobile axialement entre :
- une configuration de couplage, dans laquelle la rondelle de couplage (18), est maintenue contre une deuxième (14A) douille parmi la douille-glissière (14A) et la douille-écrou (14B), du fait de l'adhérence entre la rondelle de couplage (18) et la deuxième douille (14A),
- une configuration de fonctionnement, dans laquelle la translation et la rotation de l'arbre (15) par rapport à l'avant bras (12), selon l'axe de déplacement (Z₃), est libérée au moyen d'un premier électroaimant (17) qui, lorsqu'alimenté en énergie électrique, attire la rondelle de couplage (18) vers la première douille (14B), libérant la rotation de la première douille (14B) par rapport à la deuxième douille (14A).

3. Structure articulée (1) selon la revendication 2, **caractérisée en ce que** le dispositif de couplage comprend en outre au moins un organe élastique (19A, 19B),
**en ce que** dans la configuration de couplage, la rondelle de couplage (18) est maintenue contre la deuxième douille (14A) au moyen de l'organe élastique (19A, 19B) qui est disposé axialement entre la première douille (14B) et la rondelle de couplage (18) et qui repousse la rondelle de couplage (18) contre la deuxième douille (14A) et
**en ce que** dans la configuration de fonctionnement, l'électroaimant (17) attire la rondelle de couplage (18) vers la première douille (14B), à l'encontre de la force de rappel (F) exercée par l'organe élastique (19A, 19B).

4. Structure articulée (1) selon la revendication 2, **caractérisée en ce que** le dispositif de couplage comprend en outre un deuxième électroaimant,
**en ce que** dans la configuration de couplage, la rondelle de couplage (18) est maintenue contre la deuxième douille (14A) au moyen du deuxième électroaimant qui, alimenté en énergie électrique, attire la rondelle de couplage (18) contre la deuxième douille (14A) et **en ce que** dans la configuration de fonctionnement, le deuxième électroaimant n'est pas alimenté et le premier électroaimant (17), alimenté en énergie électrique, attire la rondelle de couplage (18) vers la première douille (14B).

5. Structure articulée (1) selon la revendication 2, **caractérisée en ce que** l'électroaimant (17) est monté autour d'un chapeau (20) fixé sur la première douille (14B), avec un jeu radial (J2) entre le chapeau (20) et l'électroaimant (17).

6. Structure articulée (1) selon l'une des revendications 2 à 5, **caractérisée en ce que** la solidarisation en rotation de la rondelle de couplage (18) avec la première douille (14B) est réalisée au moyen d'au moins un pion de guidage (143B1, 143B2) monté dans des trous (18B1, 18B2, 142B1, 142B2) réalisés à la fois dans la rondelle de couplage (18) et dans la première douille (14B).

7. Structure articulée (1) selon l'une des revendications précédentes, **caractérisée en ce que** le premier actionneur électrique (21) et le deuxième actionneur électrique (22) sont fixes par rapport au bâti (10).

8. Structure articulée (1) selon l'une des revendications précédentes, **caractérisée en ce que** le troisième actionneur électrique (23A) est fixé sur le bras (11) et **en ce que** le quatrième actionneur électrique (23B) est fixé sur l'avant bras (12).

9. Structure articulée (1) selon l'une des revendications 1 à 7 , **caractérisée en ce que** le quatrième actionneur électrique est fixé sur le bras (11) et **en ce que** le troisième actionneur électrique est fixé sur l'avant bras (12).

10. Structure articulée (1) selon l'une des revendications précédentes, **caractérisée en ce que** le mouvement de pivotement d'au moins un des actionneurs électriques (21, 22, 23A, 23B) est transmis par l'intermédiaire d'un système à poulie (42A, 42B, 43A, 43B, 143A, 143B) et courroie (32A, 32B, 33A1, 33A2, 33B).

11. Structure articulée (1) selon l'une des revendications précédentes, **caractérisée en ce que** la première douille (14B) est formée par la douille-écrou (14B) et **en ce que** la deuxième douille (14A) est formée par la douille-glissière (14A).

12. Robot multi-axes, **caractérisé en ce qu'**il comprend une structure articulée (1) selon l'une des revendications précédentes.

## Patentansprüche

1. Gelenkstruktur (1) eines Mehrachsenroboters, umfassend:
- ein festes Gestell (10),
- einen Arm (11), der an dem Gestell um eine erste Achse (Z₁) gelenkig angeordnet ist,
- ein erstes elektrisches Betätigungselement (21), das das Schwenken des Arms (1) um die erste Achse (Z₁) steuert,
- einen Vorderarm (12), der an dem Arm um eine zweite Achse (Z₂) parallel zur ersten Achse gelenkig angeordnet ist,
- ein zweites elektrisches Betätigungselement (22), das das Schwenken des Vorderarms (12) um die zweite Achse (Z₂) steuert,
- eine Achse (15) für die Befestigung eines Werkzeugs (2), die an dem Vorderarm (12) um eine dritte Achse (Z₃), parallel zur ersten und zweiten Achse gelenkig angeordnet ist,
- ein drittes Betätigungselement (23A), das das Schwenken einer Gleithülse (14A) steuert,
- ein viertes elektrisches Betätigungselement (23B), das das Schwenken einer Schraubhülse (14B) steuert,
wobei in der Struktur:
- die Gleithülse (14A) hinsichtlich der Drehung in Bezug auf den Vorderarm (12) um die dritte Achse (Z₃) beweglich ist und in Bezug auf den Vorderarm (12) translatorisch gekoppelt ist, wobei die Gleithülse (14A) mit axial angeordneten Eingreiforganen, insbesondere mit Kugeln, ausgerüstet ist, die geeignet sind, mit mindestens einer Längsnut (15A) der Achse (15) zusammenzuarbeiten,
- die Schraubhülse (14B) hinsichtlich der Drehung in Bezug auf den Vorderarm (12) um die dritte Achse (Z₃) beweglich ist und in Bezug auf den Vorderarm (12) translatorisch gekoppelt ist, wobei diese Schraubhülse (14B) mit Eingreiforganen, insbesondere Kugeln, ausgerüstet ist, die in spiralförmiger Weise um die Bewegungsachse (Z₃) angeordnet sind und geeignet sind, mit mindestens einer spiralförmigen Nut (15B), die in die Achse (15) eingearbeitet ist, zusammenzuarbeiten,
wobei die Gleithülse (14A) und die Schraubhülse (14B) am Ende des Vorderarms (12) angeordnet sind
und **dadurch gekennzeichnet, dass**
die Gelenkstruktur (1) außerdem eine Kupplungsvorrichtung umfasst, die geeignet ist, die Schraubhülse (14B) und die Gleithülse (14A) hinsichtlich der Drehung zu verbinden.

2. Gelenkstruktur (1) nach Anspruch 1, **dadurch gekennzeichnet, dass** die Kupplungsvorrichtung eine Scheibe (15) umfasst, die axial entlang der dritten Achse (Z₃) zwischen den Hülsen (14A, 14B) angeordnet ist und hinsichtlich der Drehung mit einer ersten Hülse gewählt aus Gleithülse (14A) und Schraubhülse (14B) gekoppelt ist, und dass die Kupplungsscheibe (15) axial beweglich ist zwischen:
- einer Kupplungsstellung, in der die Kupplungsscheibe (18) gegen eine zweite Hülse (14A) gewählt aus Gleithülse (14A) und Schraubhülse (14B) aufgrund der Haftung zwischen der Kupplungsscheibe (18) und der zweiten Hülse (14A) gehalten ist,
- eine Funktionsstellung, in der die Translation und die Drehung der Achse (15) in Bezug auf den Vorderarm (12) gemäß der Bewegungsachse (Z₃) mittels eines ersten Elektromagneten (17) freigesetzt ist, der, wenn er mit elektrischer Energie versorgt wird, die Kupplungsscheibe (18) zu der ersten Hülse (15B) anzieht, wodurch die Drehung der ersten Hülse (14B) in Bezug auf die zweite Hülse (14A) freigesetzt wird.

3. Gelenkstruktur (1) nach Anspruch 2, **dadurch gekennzeichnet,**
**dass** die Kupplungsvorrichtung außerdem mindestens ein elastisches Element (19A, 19B) umfasst,
**dass** in der Kupplungsstellung die Kupplungsscheibe (18) gegen die zweite Hülse (14A) mittels des elastischen Elements (19A, 19B) gehalten wird, das axial zwischen der ersten Hülse (14B) und der Kupplungsscheibe (18) angeordnet ist und das die Kupplungsscheibe (18) gegen die zweite Hülse (14A) zurückdrückt, und
**dass** in der Funktionsstellung der Elektromagnet (17) die Kupplungsscheibe (18) zu der ersten Hülse (14B) gegen die Rückstellkraft (F), die von dem elastischen Element (19A, 19B) ausgeübt wird, anzieht.

4. Gelenkstruktur (1) nach Anspruch 2, **dadurch gekennzeichnet,**
**dass** die Kupplungsvorrichtung außerdem einen zweiten Elektromagneten umfasst,
**dass** in der Kupplungsstellung die Kupplungsscheibe (18) gegen die zweite Hülse (14A) mittels des Elektromagneten gehalten wird, der, versorgt mit elektrischer Energie, die Kupplungsscheibe (18) gegen die zweite Hülse (14A) anzieht, und
**dass** in der Funktionsstellung der zweite Elektromagnet nicht versorgt wird und der erste Elektromagnet (17), versorgt mit elektrischer Energie, die Kupplungsscheibe (18) zu der ersten Hülse (14B) anzieht.

5. Gelenkstruktur (1) nach Anspruch 2, **dadurch gekennzeichnet, dass** der Elektromagnet (17) um eine Kappe (20) herum montiert ist, der an der ersten Hülse (14B) mit einem radialen Spiel (J2) zwischen der Kappe (20) und dem Elektromagneten (17) befestigt ist.

6. Gelenkstruktur (1) nach einem der Ansprüche 2 bis 5, **dadurch gekennzeichnet, dass** die Drehfestlegung der Kupplungsscheibe (18) mit der ersten Hülse (14B) mittels mindestens eines Führungsstiftes (143B1, 143B2) realisiert ist, der in Löchern (18B1, 18B2, 142B1, 142B2) montiert ist, die sowohl in der Kupplungsscheibe (18) als auch in der ersten Hülse (14B) eingearbeitet sind.

7. Gelenkstruktur (1) nach einem der vorhergehenden Ansprüche,
**dadurch gekennzeichnet, dass** das erste elektrische Betätigungselement (21) und das zweite elektrische Betätigungselement (22) in Bezug auf das Gestell (10) fest sind.

8. Gelenkstruktur (1) nach einem der vorhergehenden Ansprüche,
**dadurch gekennzeichnet, dass** das dritte Betätigungselement (23A) an dem Arm (11) befestigt ist und dass das vierte elektrische Betätigungselement (23B) an dem Vorderarm (12) befestigt ist.

9. Gelenkstruktur (1) nach einem der Ansprüche 1 bis 7, **dadurch gekennzeichnet, dass** das vierte elektrische Betätigungselement an dem Arm (11) befestigt ist und dass das dritte elektrische Betätigungselement an dem Vorderarm (12) befestigt ist.

10. Gelenkstruktur (1) nach einem der vorhergehenden Ansprüche,
**dadurch gekennzeichnet, dass** die Schwenkbewegung von mindestens einem der elektrischen Betätigungselemente (21, 22, 23A, 23B) mittels eines Riemenscheibensystems (42A, 42B, 43A, 43B, 143A, 143B; 32A, 32B, 33A1, 33A2, 33B) übertragen wird.

11. Gelenkstruktur (1) nach einem der vorhergehenden Ansprüche,
**dadurch gekennzeichnet, dass** die erste Hülse (14B) von der Schraubhülse (14B) gebildet wird und dass die zweite Hülse (14A) von der Gleithülse (14A) gebildet wird.

12. Mehrachsenroboter, **dadurch gekennzeichnet, dass** er eine Gelenkstruktur (1) nach einem der vorhergehenden Ansprüche umfasst.

## Claims

1. An articulated structure (1) for a multiple-axis robot, comprising:
- a stationary frame (10),
- an arm (11) articulated on the frame around a first axis (Z₁),
- a first electric actuator (21) commanding pivoting of the arm (11) around the first axis (Z₁),
- a forearm (12) articulated on the arm around a second axis (Z₂) parallel to the first axis,
- a second electric actuator (22) commanding the pivoting of the forearm (12) around the second axis (Z₂),
- a shaft (15) for fastening a tool (2), articulated on the forearm (12) around a third axis (Z₃) parallel to the first and second axes,
- a third electric actuator (23A) commanding the pivoting of a slide-socket (14A),
- a fourth electric actuator (23B) commanding the pivoting of a nut-socket (14B), structure in which
- the slide-socket (14A) is rotatable relative to the forearm (12) around the third axis (Z₃) and connected in translation relative to the forearm (12), said slide-socket (14A) being provided with engaging members, in particular balls, arranged axially, which are capable of cooperating with at least one longitudinal groove (15A) of the shaft (15),
- the nut-socket (14B) is rotatable relative to the forearm (12) around the third axis (Z₃) and connected in translation relative to the forearm (12), said nut-socket (14B) being provided with engaging members, in particular balls, arranged helically around the movement axis (Z₃), which are capable of cooperating with at least one helical groove (15B) arranged on the shaft (15), the slide-socket (14A) and the nut-socket (14B) are arranged at the end of the forearm (12),
**characterized in that** the articulated structure (1) also comprises a coupling device, capable of securing the nut-socket (14B) and the slide-socket (14A) in rotation.

2. The articulated structure (1) according to claim 1, **characterized in that** the coupling device comprises a washer (18) arranged axially, along the third axis (Z₃), between the sockets (14A, 14B) and rotatably connected with a first socket from among the slide-socket (14A) and the nut-socket (14B) and **in that** the coupling washer (18) is axially movable between:
- a coupling configuration, in which the coupling washer (18) is kept against a second socket (14A) from among the slide-socket (14A) and the nut-socket (14B), due to the adhesion between the coupling washer (18) and the second socket (14A),
- an operating configuration, in which the translation and rotation of the shaft (15) relative to the forearm (12), along the movement axis (Z₃), are freed by means of a first electromagnet (17) which, when supplied with electricity, attracts the coupling washer (18) toward the first socket (14B), freeing the rotation of the first socket (14B) relative to the second socket (14A).

3. The articulated structure (1) according to claim 2, **characterized in that** the coupling device then also comprises at least one elastic member (19A, 19B),
**in that** in the coupling configuration, the coupling washer (18) is kept against the second socket (14A) using the elastic member (19A, 19B), which is arranged axially between the first socket (14B) and the coupling washer (18) and which pushes the coupling washer (18) back against the second socket (14A), and
**in that** in the operating configuration, the electromagnet (17) attracts the coupling washer (18) toward the first socket (14B), against the return force (F) exerted by the elastic member (19A, 19B).

4. The articulated structure (1) according to claim 2, **characterized in that** the coupling device also comprises a second electromagnet,
**in that** in the coupling configuration, the coupling washer (18) is kept against the second socket (14A) by means of the second electromagnet, which, supplied with electricity, attracts the coupling washer (18) against the second socket (14A), and
**in that** in the operating configuration, the second electromagnet is not powered and the first electromagnet (17), supplied with electricity, attracts the coupling washer (18) toward the first socket (14B).

5. The articulated structure (1) according to claim 2, **characterized in that** the electromagnet (17) is mounted around a cap (20) fixed on the first socket (14B), with radial play (J2) between the cap (20) and the electromagnet (17).

6. The articulated structure (1) according to any of claims 2 to 5, **characterized in that** the rotational securing of the coupling washer (18) with the first socket (14B) is done using at least one guide slug (143B1, 143B2) mounted in holes (18B1, 18B2, 142B1, 142B2) formed both in the coupling washer (18) and the first socket (14B).

7. The articulated structure (1) according to any of the preceding claims, **characterized in that** the first electric actuator (21) and the second electric actuator (22) are stationary relative to the frame (10).

8. The articulated structure (1) according to any of the preceding claims, **characterized in that** the third electric actuator (23A) is fixed on the arm (11) and **in that** the fourth electric actuator (23B) is fixed on the forearm (12).

9. The articulated structure (1) according to any of claims 1 to 7, **characterized in that** the fourth electric actuator is fixed on the arm (11) and **in that** the third electric actuator is fixed on the forearm (12).

10. The articulated structure (1) according to any of the preceding claims, **characterized in that** the pivoting movement of at least one of the electric actuators (21, 22, 23A, 23B) is transmitted by means of a pulley (42A, 42B, 43A, 43B, 143A, 143B) and belt system (32A, 32B, 33A1, 33A2, 33B).

11. The articulated structure (1) according to any of the preceding claims, **characterized in that** the first socket (14B) is formed by the nut-socket (14B) and **in that** the second socket (14A) is formed by the slide-socket (14A).

12. A multiple-axis robot, **characterized in that** it comprises an articulated structure (1) according to any of the preceding claims.
